# EUROPÄISCHE PATENTSCHRIFT

(11) **EP 0 354 309 B1**
(45) Veröffentlichungstag und Bekanntmachung des Hinweises auf die Patenterteilung: **23.06.1993**
(21) Anmeldenummer: 89109333.8
(22) Anmeldetag: 24.05.1989
(51) Int. Cl.: B60J 10/00, B60J 10/04, B60J 10/06

(54) **Fahrzeugtür für insbesondere PKW**
Door for an automotive vehicle
Porte pour voiture de tourisme

(30) Priorität: 12.08.1988 DE 8810239 U
(43) Veröffentlichungstag der Anmeldung: 14.02.1990
(73) Patentinhaber: Wilhelm Karmann GmbH, D-49084 Osnabrück (DE)
(72) Erfinder: Licher, Siegfried, D-4504 Georgsmarienhütte (DE); Rothe, Karl, D-4550 Bramsche (DE)
(74) Vertreter: Busse & Busse Patentanwälte

(56) Entgegenhaltungen:
- EP-A- 0 182 318
- EP-A- 0 285 925
- US-A- 4 756 944

## Beschreibung

Die Erfindung bezieht sich auf eine Fahrzeugtür für insbesondere PKW mit einer Türscheibe in einer Ausbildung gemäß dem Oberbegriff des Anspruchs 1.

Bei Kraftfahrzeugen wird im Hinblick auf eine aerodynamisch günstige Gestaltung in zunehmendem Maße angestrebt, Seitenscheiben und insbesondere auch die in den Türrahmen absenkbaren Fahrzeugtürscheiben möglichst außenliegend und damit im Bereich der Karosserieaußenfläche vorzusehen, um insbesondere Turbulenzen verursachende Abrißkanten und Luftstauräume zu vermeiden. Bei einer bekannten Fahrzeugtür überlappt jeweils seitlich als auch oben die Scheibendichtung den Scheibenrand in der Scheibenschließstellung in einem geringfügigen Maß, wobei die Scheibenränder überragende Karosserieführungsstreben für die absenkbare Scheibe nicht vorhanden sind. Zur Führung der Türscheibe während der Auf- und Absenkbewegung sowie zur Festlegung in der Schließstellung sind an der Scheibe befestigte knopfartige Gleit- bzw. Befestigungskörper vorgesehen, die in einer einen Fenstersteg bildenden schlitzförmigen Führungsbahn entlang der hinteren Türrahmenstrebe geführt sind. Beeinträchtigt der auch einen nicht unerheblichen Karosseriebauaufwand verursachende Fenstersteg nicht nur die Sichtverhältnisse vom Fahrzeuginnenraum nach außen, so mindern insbesondere die von außen sichtbaren knopfartigen Gleitstücke auch insbesondere das optische Gesamterscheinungsbild des Fahrzeuges. Das Einkurbelverhalten der bekannten Fahrzeugtüren kann darüber hinaus bei z. B. geöffnetem Schiebedach und damit einhergehenden Unterdruckzuständen im Fahrzeuginneren nicht in vollem Maße befriedigen.

Aus der EP-A-0 182 318 ist eine Fahrzeugtür der eingangs genannten Art bekannt, bei der die Türscheiben in ihrer Schließstellung von den Führungsdichtschenkeln nach außen und damit zum Außendichtschenkel hin mit einer Kraft beaufschlagt sind, so daß in der Schließstellung trotz der Außenanordnung der Scheibe Dichtheit vorliegen soll. Für das Einfädel- und Dichtverhalten dieser Türscheibe ist jedoch nicht nur der Führungsdichtschenkel entscheidend verantwortlich. Vielmehr kann die Türscheibe nur absolut dichtend eingefädelt und abgedichtet werden, wenn bei der außenliegenden Anordnung die Türscheibe paßgenau geführt ist. Dies ist aufgrund unvermeidbarer Fertigungstoleranzen außerordentlich schwer zu bewerkstelligen.

Es ist Aufgabe der vorliegenden Erfindung, eine Fahrzeugtür der eingangs genannten Art z. B. nach der EP-A-0 182 318 zu schaffen, mit der in baulich einfacher Weise die Türscheibe weitgehend außenliegend anzubringen ist, darüber hinaus jedoch auf aufwendige karosserieseitige Fensterstege ohne Beeinträchtigung des Einkurbelverhaltens der Türscheibe weitgehend verzichtet werden kann.

Zur Lösung dieser Aufgabe zeichnet sich die Fahrzeugtür nach der Erfindung durch die im Anspruch 1 angegebenen Merkmale aus. Hinsichtlich wesentlicher vorteilhafter Ausgestaltungen der Erfindung wird auf die Ansprüche 2 bis 16 verwiesen.

Bei der Fahrzeugtür nach der Erfindung wird weiterhin die Türscheibe sowohl in ihrer Schließstellung als auch während eines Heb- oder Absenkvorganges von dem Führungsdichtschenkel mit einer nach außen und damit zum Außendichtschenkel hin ausgerichteten Kraft beaufschlagt, so daß zunächst die erste Voraussetzung geschaffen ist, daß in der Schließstellung Dichtheit vorliegt und zudem die Führung der Türscheibe durch die Dichtung selbst und somit nicht durch karosserieseitig zusätzlich vorzusehende Fensterstege oder dergleichen übernommen werden muß. Um die Türscheibe in dem gewünschten Maße freizügig außen anordnen zu können und hierbei über die Scheibendichtung in Verbindung mit der Türschachtdichtung die Führung der Türscheibe und gleichermaßen auch die Dichtheit sicherstellen zu können, ist der Türscheibenheber mit einer zur Fahrzeugtüraußenfläche hin offenen Scheibenaufnahmetasche versehen, wobei die Türscheibe an dem zum Fahrzeuginneren hin weisenden Längsprofil der Scheibenaufnahmetasche verbunden ist. Dabei ist die Türscheibe mit dem Längsprofil über eine Toleranzausgleichsraupe verbunden, durch die sich unvermeidbare Fertigungstoleranzen in einfacher Weise ausgleichen lassen. Damit ist trotz der außenliegenden Anordnung eine sichere Führung und eine absolute Dichtheit zu gewährleisten.

Der zweckmäßigerweise vorgesehene Scheibenstützkörper der Schachtdichtung über die gesamte Länge der Türscheibe trägt bei Einfädeln in den Türrahmen dafür Sorge, daß die Türscheibe sicher und exakt in den Türrahmen ein- und ausgebracht werden kann. Die mit dem Führungsdichtschenkel ausgebildete Scheibendichtung ist ein insgesamt unkompliziertes Bauteil, das in vorteilhafter Weise auch für die Großserienfertigung geeignet ist und mit nur wenigen Handgriffen an der Türrahmenstrebe während der Montage zu befestigen, vorzugsweise zu verkleben ist. Der Außendichtschenkel braucht gleichfalls nur geringe Querschnittsabmessungen zu haben, so daß die Türscheibe weit außenliegend mit damit einhergehenden aerodynamischen Vorteilen angeordnet werden kann.

Zur weiteren Erläuterung der Erfindung wird auf die Zeichnung und die nachfolgende Beschreibung verwiesen. In der Zeichnung zeigen:
- Fig. 1: in einer schematischen Perspektivdarstellung ausschnittsweise eine Fahrzeugkarosserie mit einem Ausführungsbeispiel der Fahrzeugtür nach der Erfindung;
- Fig. 2: eine Schnittdarstellung des Ausführungsbeispiels nach Fig. 1 entsprechend den Schnittlinien II-II in Fig. 1;
- Fig. 3: ausschnittsweise eine Querschnittsdarstellung des Ausführungsbeispiels gemäß der Schnittlinie III-III in Fig. 1;
- Fig. 4: ausschnittsweise eine Querschnittsdarstellung des Ausführungsbeispiels gemäß der Schnittlinie IV-IV in Fig. 1, und
- Fig. 5: ausschnittsweise eine Querschnittsdarstellung gemäß der Schnittlinie V-V in Fig. 1.

Die in der Zeichnung allgemein mit 1 bezifferte Fahrzeugkarosserie eines Personenkraftwagens hat eine Fahrzeugtür 2 mit einer Kurbeltürscheibe 3, die jedoch auch mittels eines motorischen Antriebes über den allgemein mit 4 bezifferten Türschacht in den Türrahmen 5 abgesenkt werden kann.

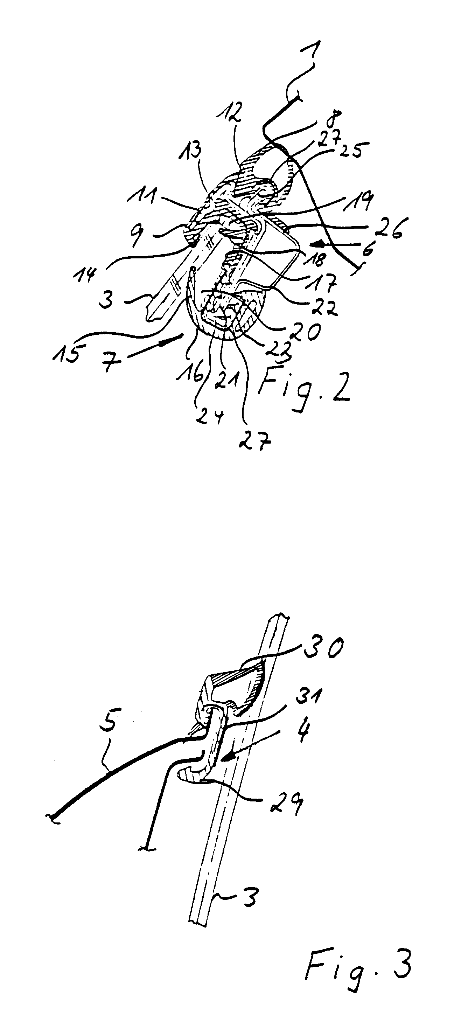

Wie insbesondere in der Querschnittsdarstellung nach Fig. 2 veranschaulicht ist, hat die Türrahmenstrebe 6 eine Scheibendichtung 7, die diese zunächst nach außen hin vollständig abdeckt und gleichfalls die Türspaltdichtung 8 aufweist. Die Scheibendichtung 7 hat einen die Türscheibe in ihrer Schließstellung an ihrem Ober- bzw. vorderen Seitenrand dichtend übergreifenden Außendichtschenkel 9. Der Außendichtschenkel ist in dem veranschaulichten Ausführungsbeispiel derart ausgebildet, daß er bis zu seinem endseitigen, an der Scheibe anliegenden Außenlippenansatz 10 einen inneren Aufnahmeraum für einen an dem Türrahmen 5 ausgebildeten Stützansatz 11 hat, der von der Scheibendichtung 7 bzw. dem Außendichtschenkel 9 sowohl außenseitig als auch innenseitig und von oben vollständig ummantelt ist. Oberseitig ist der Stützschenkel nach außen hin abgekröpft und von einem im Querschnitt hakenförmigen Formansatz 12 zur sicheren Festlegung der Scheibendichtung 7 an dem Stützansatz umgriffen.

Der Stützansatz gibt erhöhte Unterstützung gegen Herausdrücken der Scheibe und damit auch eine große Einbruchsicherheit auf engstem Raum und verbessert darüber hinaus die Stabilität der Türrahmenstrebe. Der Außendichtschenkel 9 hat im Bereich der äußeren Scheibenrandkante der in der Scheibenschließstellung befindlichen Türscheibe 3 einen weiteren Formansatz 13, so daß zwischen dem endseitigen Ende des Außendichtschenkels 9, dem Formansatz 13 und der Außenfläche der Türscheibe 3 eine erste Innenhohlkammer 14 ausgebildet ist, die nicht nur die Dichteigenschaften der Scheibendichtung 7 verbessert, sondern zudem auch zur Herabsenkung der Geräuschentwicklung beiträgt. Die Innenseite der Türscheibe wird von einem allgemein mit 15 bezifferten Führungsdichtschenkel beaufschlagt, der derart ausgebildet ist, daß er in der schließstellung der Türscheibe und während eines Anheb- bzw. Absenkvorganges eine nach außen gerichtete Kraft auf die Türscheibe und damit gegen den Außendichtschenkel in einem derartigen Maße ausübt, daß die Türscheibe zwar leicht und sicher gehoben bzw. abgesenkt werden kann, durch die Scheibendichtung 7 selbst jedoch eine sichere Führung der Türscheibe 3 gewährleistet ist. Der Führungsdichtschenkel 15 erstreckt sich in der veranschaulichten Weise nasenförmig vom unteren Ende der Scheibendichtung 7 nach oben und ist zum Fahrzeuginneren hin elastisch bzw. derart beweglich ausgebildet - ausgehend von der veranschaulichten Lage -, daß er in dem veranschaulichten Beispiel um etwa das Maß der Türscheibenstärke nach innen ausweichen kann. An seiner Außenfläche ist er mit einer Führungsstützarmierung 16 versehen.

Im Bereich des oberen Scheibeninnenrandes erstreckt sich von dem inneren Scheibendichtbereich 17 zur Türscheibe 3 hin ein Innendichtschenkel 18, der gemeinsam mit dem Formansatz 13, der Scheibenoberkante sowie dem Führungsdichtschenkel 15 und dem inneren Scheibendichtbereich zwei weitere Innenhohlkammern 19 und 20 begrenzt, die zu einer weiteren Optimierung der Dichteigenschaften sowie Herabsetzung der Innengeräusche in Fahrzeug beitragen.

Die Türrahmenstrebe 6 hat einen den Stützansatz 11 mit Abstand nach unten hin überragenden Führungssteg 21, der zur Scheibe 3 hin gänzlich, sowie zum Fahrzeuginneren hin bis zu dem ausgebauchten Strebenbereich 22 von der Scheibendichtung ebenfalls umschlossen ist. In dem unteren Bereich des Führungssteges zugeordneten Bereich der Scheibendichtung 7 sind an den Führungssteg 21 anlegbare Dichtlippenhaken 23 ausgebildet, die wiederum Innenhohlkammern 24 begrenzen.

Nach oben hin hat die Türrahmenstrebe 6 einen emporragenden Spaltdichtungshalteansatz 25, über den die Spaltdichtung 8 gestülpt und anschließend an dem ausgebauchten Türrahmenstrebenbereich 22 über eine Klebenaht 26 befestigt ist. Die Türspaltdichtung 8 schließt sich unmittelbar an den Außendichtschenkel 9, der auch die Türrahmenstrebenabdeckung nach außen hin bildet, an, so daß sich von der außenliegenden Türscheibe bis hin zur angrenzenden Karosserie ein nahezu nahtloser Übergang mit den damit einhergehenden aerodynamischen Vorteilen ergibt, so daß auch Fahrzeugkarosseriewindgeräusche aufgrund der annähernd glatt mit der Außenhaut der Fahrzeugkarosserie schließenden Tür weit verminderd sind. Zudem ergibt sich ein von außen her durch die Scheibendichtung mit integrierter Türspaltdichtung her außenordentlich gefälliges, einheitliches Erscheinungsbild, ohne daß von außen her sichtbare Fensterstege bzw. darin geführte Gleitführungskörper bei dennoch optimaler Scheibenführung vorhanden sind. Im Bereich von Ummantelungen von Türrahmenstrebenteilen ist die Scheibendichtung mit einer insgesamt mit 27 bezifferten Armierung versehen.

Wie insbesondere Fig. 3 näher veranschaulicht, hat die Türschachtdichtung 28, die am oberen Bereich des Türrahmens 5 im Bereich des Türschachtes 4 festlegbar ist, einen in den Türrahmen hineinragenden, endseitig in etwa harpunenartig im Querschnitt geformten, elastischen Dichtungsteil 29 sowie einen den Türschacht nach oben hin abdichtenden Schachtdichtsteg 30, der gleichsam in analoger Weise wie der Führungsdichtschenkel 15 quer zur Türscheibe nachgiebig ausgebildet ist. Zwischen dem Schachtdichtsteg 30 und dem unteren Ende des Schachtdichtteils 29 ist der Scheibenstützkörper 31 angeordnet, der zum sicheren Einfädeln der Scheibe in Verbindung mit dem Außendichtschenkel sowie dem Führungsdichtschenkel beiträgt.

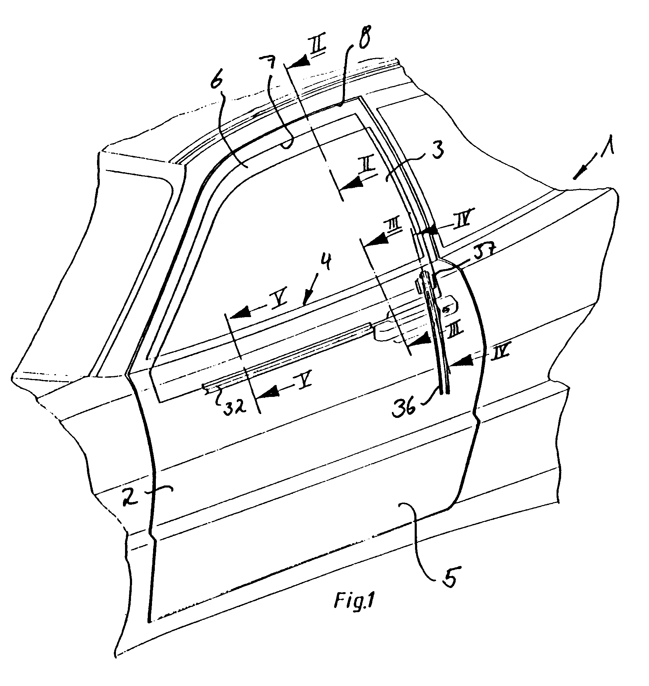

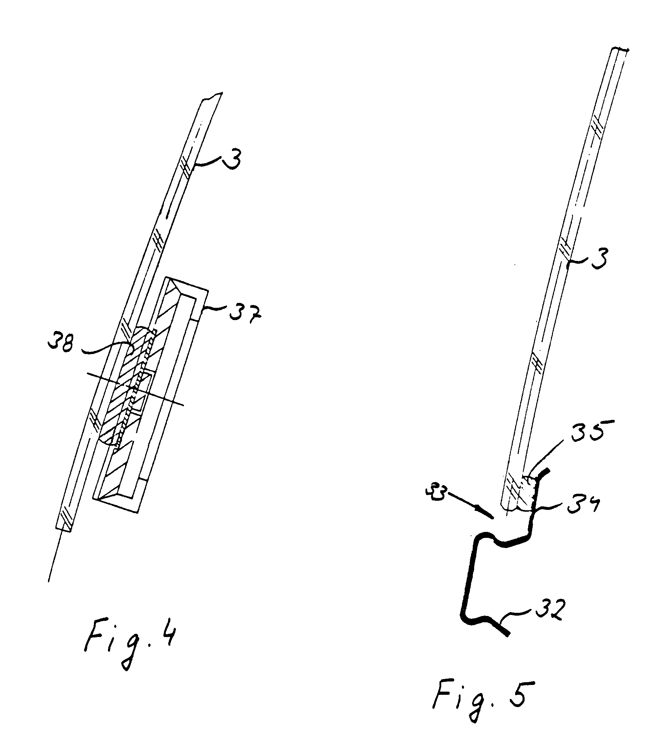

Um insbesondere die Türscheibe in dem gewünschten Maße relativ freizügig außen anordnen zu können und hierbei der Scheibendichtung in Verbindung mit der Türschachtdichtung die Führung der Türscheibe 3 sicherstellen zu lassen, ist der Türscheibenheber 32 mit einer zur Fahrzeugtüraußenfläche hin offenen Scheibenaufnahmetasche 33 versehen, wobei die Türscheibe 3 an dem zum Fahrzeuginneren hinweisenden Längsprofil 34 der Scheibenaufnahmetasche verbunden ist (Fig. 5). Die Türscheibe 3 ist mit dem Längsprofil 34 über eine Kleberaupe 35 verbunden, wobei durch die Kleberaupe Fertigungstoleranzen in einfacher Weise ausgeglichen werden können. Die Führung der Türscheibe 3 innerhalb des Rahmens umfaßt eine an dem Türrahmen innenseitig festlegbare Führungsschiene 36 sowie einen an der Türscheibe 3 befestigbaren, die Führungsschiene umgreifenden Führungsgleitteil 37 (Fig.1, 4), wobei der Führungsgleitkörper 37 in gleicher Weise über eine Toleranzausgleichskleberaupe 36 an der Türscheibe befestigt ist.

## Patentansprüche

1. Fahrzeugtür (2) für insbesondere PKW mit einer Türscheibe (3), die durch einen mit einer Schachtdichtung (38) versehenen Türschacht (4) mittels eines Hebers (32) in einen Türrahmen (5) absenkbar und anhebbar ist, mit von Türrahmenstreben (6) getragenen Scheibendichtungen (7), welche die Türscheibe (3) in ihrer Schließstellung an ihrem Ober- bzw. Seitenrand dichtend umgrenzen, wobei zumindest eine Scheibendichtung (7) einen den Scheibenaußenrand in der Scheibenschließstellung übergreifenden Außendichtschenkel (9) umfaßt, die Scheibendichtung (7) einen dem Außendichtschenkel (9) zugeordneten, an der Türscheibeninnenfläche anlegbaren und die Türscheibe (3) mit einer nach außen gerichteten Kraft beaufschlagenden Führungsdichtschenkel (15) hat, **dadurch gekennzeichnet,** daß der Heber (32) eine zur Fahrzeugtüraußenfläche hin offene Scheibenaufnahmetasche (33) hat und die Türscheibe (3) mit einem die Scheibenaufnahmetasche (33) zum Fahrzeuginneren hin begrenzenden Längsprofil (34) über eine Toleranzausgleichsraupe (35) verbunden ist.

2. Fahrzeugtür nach Anspruch 1, **dadurch gekennzeichnet,** daß die Toleranzausgleichsraupe (35) durch eine Kleberaupe gebildet ist.

3. Fahrzeugtür nach Anspruch 1 oder 2, **dadurch gekennzeichnet,** daß die Schachtdichtung (38) einen Scheibenstützkörper (31) für die Türscheibenaußenfläche umfaßt.

4. Fahrzeugtür nach einem der Ansprüche 1 bis 3**,** **dadurch gekennzeichnet,** daß der Führungsdichtschenkel (15) und ein oberhalb des Scheibenstützkörpers (31) angeordneter Schachtdichtsteg (30) entlang eines zumindest in etwa der Hälfte der Scheibendicke entsprechenden Weges quer zur Auf- oder Absenkbewegungsrichtung der Türscheibe (3) beweglich ausgebildet sind.

5. Fahrzeugtür nach einem der Ansprüche 1 bis 4, **dadurch gekennzeichnet,** daß dem Führungsdichtschenkel (15) ein in der Scheibenschließstellung am oberen Scheibeninnenrand anlegbarer Innendichtschenkel (18) zugeordnet ist, der gemeinsam mit einerseits dem Außendichtschenkel (9) und mit andererseits dem Führungsdichtschenkel (15) Innenhohlkammern (19,20) begrenzt.

6. Fahrzeugtür nach einem der Ansprüche 1 bis 5, **dadurch gekennzeichnet,** daß der Führungsdichtschenkel (15) Teil einer eine Türspaltdichtung (8) ausbildenden Scheibendichtung (7) ist.

7. Fahrzeugtür nach einem der Ansprüche 1 bis 6, **dadurch gekennzeichnet,** daß die Türrahmenstrebe (6) eine den Scheibenaußenrand in der Scheibenschließstellung übergreifenden, von dem Außendichtschenkel (9) zumindest bereichsweise ummantelten Stützansatz (11) hat.

8. Fahrzeugtür nach Anspruch 7, **dadurch gekennzeichnet,** daß die Türrahmenstrebe (6) einen inneren Führungssteg (21) aufweist, der eine größere Längserstreckung als der Stützansatz (11) hat.

9. Fahrzeugtür nach Anspruch 5, **dadurch gekennzeichnet,** daß die Türrahmenstrebe (6) einen emporragenden Spaltdichtungshalteansatz (25) hat.

10. Fahrzeugtür nach Anspruch 7, 8 und 9, **dadurch gekennzeichnet,** daß der Stützansatz (11), der Führungssteg (21) sowie der Spaltdichtungshalteansatz (25) zumindest annähernd von der Scheibendichtung umschlossen sind.

11. Fahrzeugtür nach Anspruch 9, **dadurch gekennzeichnet,** daß die Scheibendichtung (7) an den Führungssteg (21) anlegbare Dichtlippenhaken (23) umfaßt, durch die an dem Führungssteg (21) Innenhohlkammern (24) begrenzbar sind.

12. Fahrzeugtür nach einem der Ansprüche 1 bis 11, **dadurch gekennzeichnet,** daß die Scheibendichtung (7) eine Armierung (27) aufweist.

13. Fahrzeugtür nach einem der Ansprüche 1 bis 12, **dadurch gekennzeichnet,** daß der Führungsdichtschenkel (15) an seiner der Türscheibe (3) zugewandten Schenkelaußenfläche eine Führungsstützarmierung (16) trägt.

14. Fahrzeugtür nach einem der Ansprüche 1 bis 13, **dadurch gekennzeichnet,** daß die Scheibendichtung (7) mit der Türrahmenstrebe (6) verklebt ist.

15. Fahrzeugtür nach einem der Ansprüche 1 bis 14, **dadurch gekennzeichnet,** daß die Führung durch eine innerhalb des Türrahmens (5) festlegbare Führungsschiene (36) sowie einen an der Türscheibe (3) befestigbaren, die Führungsschiene (36) übergreifenden Führungsgleitkörper (37) gebildet ist.

16. Fahrzeugtür nach Anspruch 15, **dadurch gekennzeichnet,** daß der Führungsgleitkörper (37) gleichfalls über eine Toleranzausgleichskleberaupe (38) an der Türscheibe (3) befestigbar ist.

## Claims

1. A vehicle door (2) particularly for a motor car, comprising a door window (3) adapted to be lowered and raised in a door frame (5) by raising means (32) through a door well (4) provided with a seal (38) and with, supported by door frame struts (6), window seals (7) which engage in sealing-tight manner around the top and/or lateral edges of the door window (3) when it is in its closed position, at least one window seal (7) comprising an outer sealing flange (9) which engages over the outer window edge when it is in the closed position, the window seal (7) having associated with the outer sealing flange (9) a guiding sealing flange (15) which is adapted to be applied against the inside surface of the door window applying to this latter an outwardly directed force, characterised in that the raising means (32) has a window housing pocket (33) which is open towards the outer surface of the vehicle door and in that the window (3) is connected by a tolerance-compensating bead (35) to a longitudinal section member (34) which defines the window housing pocket (33) in respect of the vehicle interior.

2. A vehicle door according to Claim 1, characterised in that the tolerance-compensating bead (35) is a bead fixed by adhesion.

3. A vehicle door according to Claim 1 or 2, characterised in that the well seal (38) comprises a window bracing member (31) for the outer surface of the window.

4. A vehicle door according to one of Claims 1 to 3, characterised in that the guiding sealing flange (15) and a well sealing web (30) disposed above the window bracing member (31) are constructed for movement transversely to the upwards or downwards direction of movement of the window (3) along a path which corresponds to at least half the thickness of the window.

5. A vehicle door according to one of Claims 1 to 4, characterised in that associated with the guiding sealing flange (15) there is, adapted to be applied against the upper inner edge of the window when it is in its closed position, an inner sealing flange (18) which defines inner chambers (19, 20) jointly with the outer sealing flange (9) on the one hand and the guiding sealing flange on the other.

6. A vehicle door according to one of Claims 1 to 5, characterised in that the guiding sealing flange (15) is part of a window seal (7) which forms a seal (8) in the door gap.

7. A vehicle door according to one of Claims 1 to 6, characterised in that the door frame strut (6) has, engaging over the outer edge of the window in the closed position of the window, a bracing projection (11) at least portions of which are surrounded by the outer sealing flange (9).

8. A vehicle door according to Claim 7, characterised in that the door frame strut (6) has an inner guide web (21) which has a greater longitudinal extension than the bracing projection (11).

9. A vehicle door according to Claim 5, characterised in that the door frame strut (6) has a projecting gap seal maintaining projection (25).

10. A vehicle door according to Claim 7, 8 and 9, characterised in that the bracing projection (11), the guide web (21) and the gap seal maintaining projection (25) are at least approximately enclosed by the window seal.

11. A vehicle door according to Claim 9, characterised in that the window seal (7) comprises, adapted to be applied against the guide web (21), sealing lip hooks (23) by which it is possible to bound inner cavities (24) on the guide web (21).

12. A vehicle door according to one of Claims 1 to 11, characterised in that the window seal (7) has a reinforcement (27).

13. A vehicle door according to one of Claims 1 to 12, characterised in that the guiding sealing flange (15) has on the outer surface of its flange which is towards the door window (3) a guiding reinforcement (16).

14. A vehicle door according to one of Claims 1 to 13, characterised in that the window seal (7) is fixed to the door frame strut (6) by adhesion.

15. A vehicle door according to one of Claims 1 to 14, characterised in that the guide is constituted by a guide rail (36) which can be fixed within the door frame (5) and by a guide sliding member (37) which engages over the guide rail (36) and which can be fixed to the door window (3).

16. A vehicle door according to Claim 15, characterised in that the guide sliding member (37) can likewise be fixed to the door window (3) via a tolerance-compensating bead (38) which is secured by adhesion.

## Revendications

1. Portière de voiture (2) en particulier pour voitures de tourisme avec une glace (3), qui peut être soulevée ou abaissée dans un cadre de portière à travers une cage de portière (3) munie d'une garniture d'étanchéité (38) au moyen d'un levier (32), avec des garnitures d'étanchéité de la glace portées par des montants du cadre de porte (6), garnitures qui délimitent la glace (3) dans sa position de fermeture sur son bord supérieur ou son bord latéral, portière dans laquelle une garniture de la glace (7) au moins comporte une branche d'étanchéité extérieure (9) enveloppant le bord extérieur de la glace dans la position de fermeture de la glace et la garniture de la glace (7) a une branche d'étanchéité et de guidage (15) associée à la branche d'étanchéité extérieure (9), applicable contre la face intérieure de la glace et sollicitent la glace (3) avec une force dirigée vers l'extérieur
portière de voiture caractérisée en ce que
le levier (32) a une poche de réception de la glace (33) ouverte vers la face extérieure de la portière de voiture et la glace (3) est reliée à un profil longitudinal (34) délimitant vers l'intérieur du véhicule la poche de réception de la glace (33), par un cordon de compensation de tolérance (35).

2. Portière de voiture selon la revendication 1, caractérisée en ce que le cordon de compensation de tolérance (35) est formé par un cordon d'adhésif.

3. Portière de voiture selon la revendication 1 ou la revendication 2, caractérisée en ce que la garniture d'étanchéité de la cage (38) comprend une pièce de support de glace (31) pour la surface extérieure de la glace.

4. Portière de voiture selon la revendication 1 à 3, caractérisée en ce que la branche d'étanchéité de guidage (15) et une nervure d'étanchéité de la cage (30) placée au-dessus de la pièce d'appui de la glace (31) sont réalisées le long d'une voie correspondant au moins sensiblement à la moitié de l'épaisseur de la glace transversalement à la direction du mouvement de montée ou de descente de la glace (3).

5. Portière de voiture selon une des revendications 1 à 4, caractérisée en ce qu'une branche d'étanchéité intérieure (18) pouvant être appliquée sur le bord supérieur interne de la glace dans sa position de fermeture est associée à la branche d'étanchéité de guidage (15), et la branche (18) délimite en commun avec d'une part la branche d'étanchéité extérieure (9) et d'autre part la branche d'étanchéité de guidage (15), des espaces intérieurs creux (19, 20).

6. Portière de voiture selon une des revendications 1 à 5, caractérisée en ce que la branche d'étanchéité de guidage (15) est une partie d'une garniture d'étanchéité de la glace (7) réalisant une garniture du jeu de la porte.

7. Portière de voiture selon une des revendications 1 à 6, caractérisée en ce que le montant du cadre de portière (6) a un prolongement d'appui (11) recouvrant le bord extérieur de la glace dans la position de fermeture et enveloppé au moins partiellement par la branche d'étanchéité extérieure (9).

8. Portière de voiture selon la revendication 7, caractérisée en ce que le montant du cadre de porte (6) a une nervure de guidage (21), qui a un développement longitudinal plus grand que le prolongement d'appui (11).

9. Portière de voiture selon la revendication 5, caractérisée en ce que le montant du cadre de porte (6) a un prolongement de maintien de la garniture de jeu (25) se dressant vers le haut.

10. Portière de voiture selon les revendications 7, 8 et 9, caractérisée en ce que le prolongement d'appui (11) de la nervure de guidage (21) ainsi que le prolongement de maintien de la garniture de jeu (25) sont enfermés au moins approximativement par la garniture d'étanchéité de la glace.

11. Portière de voiture selon la revendication 9, caractérisée en ce que la garniture de la glace (7) comprend des crochets à lèvres d'étanchéité (23) pouvant être appliqués sur la nervure de guidage (21), grâce auxquels on peut délimiter des espaces intérieurs creux (24) contre la nervure de guidage (21).

12. Portière de voiture selon une des revendications 1 à 12, caractérisée en ce que la garniture de la glace (7) comprend une armature (27).

13. Portière de voiture selon une des revendications 1 à 12, caractérisée en ce que la branche d'étanchéité de guidage (15) porte sur sa surface extérieure tournée vers la glace (3) une armature de guidage d'appui (16).

14. Portière de voiture selon une des revendications 1 à 13, caractérisée en ce que la garniture de glace (7) est fixée par collage sur le montant du cadre de portière (6).

15. Portière de voiture selon une des revendications 1 à 14, caractérisée en ce que le guidage est réalisé par un rail de guidage (36) pouvant être fixé à l'intérieur du cadre de portière (5), ainsi que par une pièce de guidage par coulissement (37) mordant sur le rail de guidage (36).

16. Portière de voiture selon la revendication 15, caractérisée en ce que la pièce de guidage par coulissement (37) peut également être fixée sur la glace (3) par un cordon de colle pour compensation de tolérances (38).
